Europäisches Patentamt

European Patent Office

Office européen des brevets

(11) Publication number : **0 488 711 A2**

# EUROPEAN PATENT APPLICATION

(21) Application number : 91310987.2

(22) Date of filing : 28.11.91

(51) Int. Cl.⁵ : **C08L 67/02**, C08K 3/00, C08K 5/09, // (C08L67/02, 23:02, 23:02)

(30) Priority : 29.11.90 JP 326095/90

(43) Date of publication of application :
03.06.92 Bulletin 92/23

(84) Designated Contracting States :
AT BE CH DE DK ES FR GB GR IT LI LU NL SE

(71) Applicant : **E.I. DU PONT DE NEMOURS AND COMPANY**
1007 Market Street
Wilmington Delaware 19898 (US)

(72) Inventor : **Kobayashi, Toshikazu**
Shi-Ishikawa Cho
Midori Ku, Yokohama-Shi 227 (JP)

(74) Representative : **Jones, Alan John et al**
CARPMAELS & RANSFORD 43 Bloomsbury Square
London, WC1A 2RA (GB)

(54) **Polyester resin composition.**

(57) This invention relates to a polyester resin composition of 40 to 90 wt% of polyethyleneterephthalate, 2 to 30 wt% of a polyolefin, 0.1 to 10 wt% of a compound containing sodium or potassium and/or 0.01 to 0.3 wt% of talc, and 1 to 30 wt% of an olefin-based copolymer containing an epoxy resin or an olefin-based copolymer modified by an acid anhydride. The composition has good mechanical properties, can be subjected to low-temperature molding, and has a low specific gravity.

EP 0 488 711 A2

## BACKGROUND OF THE INVENTION

Field of the Invention

The present invention relates to a polyester resin composition which can be subjected to low-temperature molding, is excellent in heat resistance and mechanical characteristics, and has a low specific gravity.

Description of the Related Art

Although polyethyleneterephthalate is known as a resin having good sliding, mechanical, and electrical characteristics and high chemical resistance, it has problems in impact strength and molding properties.

In order to improve the molding properties, a sodium salt or potassium salt is conventionally used as a nucleating agent in a composition as described in Published Examined Japanese Patent Application No. 55-47058 or the like.

In recent years, a demand has arisen for a composition having a low specific gravity as the weight and size of an electronic appliance part or an automobile part have been decreased, and a composition having improved low-temperature molding properties is also required. Therefore, these requirements must be satisfied.

## SUMMARY OF THE INVENTION

It is an object of the present invention to provide a polyester resin composition which has good mechanical characteristics, can be subjected to low-temperature molding, and has a low specific gravity.

In order to achieve the above object of the present invention, the present inventor succeeded in obtaining a novel and useful polyester resin composition by mixing 40 to 90 wt% of polyethyleneterephthalate, 2 to 30 wt% of a polyolefin, 0.1 to 10 wt% of a compound containing sodium or potassium and/or 0.01 to 3 wt% of talc, and 1 to 30 wt% of an olefin-based copolymer containing an epoxy group or an olefin-based copolymer modified by an acid anhydride.

A polyester resin composition of the present invention is mixed with a polyolefin as a nucleating agent together with a sodium compound or a potassium compound, and/or talc in order to improve low-temperature molding properties,while good mechanical characteristics of polyethyleneterephthalate are maintained.

Since polyethyleneterephthalate has a very low crystallization rate of about 130°C or less and therefore cannot be subjected to low-temperature molding, a nucleating agent is used to improve its molding properties. Polyolefin is known as a nucleating agent of polyethyleneterephthalate because not only is it a resin having good molding properties, high toughness, and a high petrol resistance but also it has a low specific gravity and is inexpensive. However, when a polyolefin is singly used, it does not provide a sufficient nucleating effect. In the present invention, therefore, both a polyolefin and a sodium compound or a potassium compound, and/or talc, all of which are known as conventional nucleating agents, are used as nucleating agents of polyethyleneterephthalate. As a result, since a nucleating effect is further improved than when the respective nucleating agents are independently used, a composition which can be subjected to low-temperature molding is obtained.

In addition, when polypropylene is used as the polyolefin, the weight of a molded product of a composition mixed with these two types of nucleating agents is decreased since the specific gravity of polypropylene is lower than that of polyethyleneterephthalate.

Furthermore, as a miscibility control agent of polyethyleneterephthalate and olefins, an olefin-based copolymer containing an epoxy group or an olefin-based copolymer modified by an acid anhydride is mixed. Therefore, since the epoxy group or the acid anhydride reacts with polyethyleneterephthalate and the olefins are miscible with each other, no surface peeling is caused in the obtained molded product.

Polyethyleneterephthalate used in the composition of the present invention preferably has an intrinsic viscosity of at least about 0.4 and up to about 1.2. Although the mixing amount of polyethyleneterephthalate is determined in consideration of desired physical properties of the obtained molded product, it is 40 to 90 wt%, and preferably, 50 to 80 wt% with respect to the total amount of the composition. If the mixing amount is less than 40 wt%, no sufficient heat resistance can be obtained in an obtained molded product.

Preferable examples of the polyolefin used in the present invention are polypropylene, polyethylene, and a polypropylene/polyethylene copolymer; polypropylene is most preferred. These compounds may be used singly or in a combination of two or more thereof. When polypropylene is used, it is preferred to use polypropylene having a melt index (ASTM D123) of 0.1 to 50 g/10 min, and more preferably, 0.5 to 20 g/10 min. When polyethylene is to be used, it is preferred to use polyethylene having a melt index (ASTM D1238) of 0.1 to 50 g/10 min, and more preferably, 0.5 to 20 g/10 min. Although the mixing amount of polyolefin is determined in consideration of desired physical properties of the obtained molded product, it is 2 to 30 wt%, and preferably, 3 to 15 wt% of the total amount of the composition. If the mixing amount is less than 2 wt%, no sufficient nucleating effect of the polyolefin can be obtained. If the amount is more than 30 wt%, a heat resistance of the obtained molded product is decreased.

Examples of a compound containing sodium or potassium used in the present invention are an ionic compound such as sodium chloride, sodium montanate, or a sodium salt or potassium salt of an organic polymer having a carboxyl group such as a sodium salt of a copolymer containing an olefin and methacrylic acid. In addition, a sodium salt or potassium salt of an organic polymer having a sulfonic acid group may also be used. The mixing amount of the compound is 0.1 to 10 wt% with respect to the total amount of the composition. If the mixing amount is less than 0.1 wt%, no sufficient nucleating effect can be expected. If the amount is more than 10 wt%, the effect remains unchanged. Partially or entirely in place of the compound containing sodium or potassium, talc may be mixed. The mixing amount of talc is 0.01 to 3 wt%, and preferably, 0.03 to 1 wt%. The compound containing sodium or potassium and talc may be used singly or may both be used.

Examples of the olefin-based copolymer containing an epoxy group used in the present invention are a copolymer of ethylene and an unsaturated epoxy compound such as an ethylene-glycidylmethacrylate copolymer, and a copolymer of ethylene, an acrylic acid-based ester, and an unsaturated epoxy compound such as an ethylene-butylacrylate-glycidylmethacrylate copolymer. Examples of the olefin-based copolymer modified by an acid anhydride are an ethylene-propylene-diene copolymer modified by an acid anhydride, an ethylene-propylene copolymer modified by an acid anhydride, polypropylene modified by an acid anhydride, and a styrene-ethylene-butadiene-styrene copolymer modified by an acid anhydride. Of these copolymers, the ethylene-butylacrylate-glycidylmethacrylate copolymer is most preferred. The mixing amount of the copolymer is 1 to 30 wt%, preferably, 3 to 10 wt%, with respect to the total amount of the composition. If the mixing amount is less than 1 wt%, a whitening effect is caused by surface peeling of polyethyleneterephthalate and olefins. If the amount is more than 30 wt%, a nucleating effect is deteriorated.

5 to 150 parts by weight of an inorganic reinforcing substance such as a glass fiber, mica, and whisker can be mixed in 100 parts by weight of the composition mixed with the above components. A molded product obtained from the composition mixed with such an inorganic reinforcing substance has better low-temperature molding properties and higher heat resistance, stiffness, and mechanical strength.

The compositions of the present invention may also contain additives commonly employed with polyester resins, such as colorants, mold release agents, antioxidants, ultraviolet light stabilizers, flame retardants, and the like. Additives which improve physical properties, such as tensile strength and elongation, can also be employed.

When the composition of the present invention is kneaded, a plasticizer such as neopentylglycol dibenzoate, triethyleneglycol dibenzoate, triethyleneglycol dibenzoate, tris-2-ethylhexyltrimellitate, dioctylphthalate, and laurylnitrile may be mixed, or other various conventional additives may be mixed.

In the composition of the present invention, in place of polyethyleneterephthalate and the compound containing sodium or potassium, polyethyleneterephthalate having a sodium atom at its terminal end or polyethyleneterephthalate having a potassium atom at its terminal end may be used. These compounds are described in U.S. Patent No. 4,425,470 and can be manufactured by methods described therein. These compounds can be used singly or in a combination of two or more thereof.

A melt-kneading method is used to manufacture the polyester resin composition of the present invention, and kneading apparatuses such as a Banbury mixer, an extruder, and various types of kneaders can be used for this purpose. In the manufacture of the polyester resin composition of the present invention, the respective components may be simultaneously kneaded or kneaded in an order that polyethyleneterephthalate and the polyolefin are kneaded first, and then the compound containing sodium or potassium and/or talc, and the olefin-based copolymer having an epoxy group are kneaded. The kneading order may be altered such that after the polyolefin and the olefin-based copolymer having an epoxy group are kneaded, polyethyleneterephthalate, the compound containing sodium or potassium and/or talc are kneaded. However, it is not preferred to perform melt-kneading for the compound containing sodium together with the polyolefin or the olefin-based copolymer containing an epoxy group because the function of the compound containing sodium as a nucleating agent is degraded.

## EXAMPLES

The present invention will be described in more detail below by way of its examples and comparative examples. However, the present invention is not limited to these examples.

In the examples, the following components were used:

As polyethyleneterephthalate (PET), a product available from E. I. du Pont de Nemours and Company was used, as polyethylene (PE), SHOWREX F6200v available from Showa Denko K.K. was used, and as polypropylene (PP), POLYPROPYLENE K1011 available from Chisso K.K. was used.

As the sodium salt, Surlyn® 8920 (available from E. I. du Pont de Nemours and Company) as a copolymer containing an olefin and sodium methacrylate was used in Examples 1 to 3 and Comparative Example 1, and sodium montanate (available from Hoechst Co.) was used in Examples 4 and 6. In addition, FUJI TALC LMS-200 (available from Fuji Talc K.K.) was used as talc.

As the epoxy compound, BONDFAST C (available from SUMITOMO CHEMICAL CO., LTD.) as an ethylene-glycidylmethacrylate copolymer (glycidylmethacrylate content = 5 wt%) was used in Example 1, and an ethylene-butylacrylate-glycidylmethacrylate copolymer (butylacrylate content = 31%, glycidylmethacrylate content = 5.2%) was used in the other examples.

As the acid anhydride-modified compound, CLAYTON FG1901X,SEBS (a styrene-ethylene-butylene-styrene copolymer modified by a maleic anhydride and available from Shell Chemical Co., Ltd.) was used in Example 6, and EPDM modified by a maleic anhydride (available from E. I. du Pont de Nemours and Company) was used in Example 7.

As the glass fiber, TP-64 available from Nippon Plate Glass Co., Ltd. was used.

After the above resins and nucleating agents in amounts (parts by weight) listed in tables (to be presented later) were pre-mixed by a tumbler for 20 minutes, the resultant mixture was melt-kneaded into pellets at a temperature of 290°C using a 35-mm twin-screw extruder TEM35B (available from Toshiba Machine Co., Ltd.), thereby obtaining a resin composition. The obtained resin composition was dried at 135°C for two hours, and a molding machine was used to form physical property test samples at a molding temperature of 290°C and a mold temperature of 70°C. Test results are also summarized in the tables to be presented later.

The test of Izod impact strength (kg cm/cm) was performed in accordance with ASTM D256, and the test of heat deformation temperature (HDT: 18.6 kg/cm²) was performed in accordance with ASTM D648.

To measure $\Delta$Hh/$\Delta$Hc, the polyethyleneterephthalate resin composition was molded at 70°C to form a 1/16-inch thick test sample. A proper amount of the resin was cut from the test sample, and heat generation ($\Delta$Hh) was recorded at a temperature of 95°C to 120°C. This heat generation corresponds to a recrystallization peak of polyethyleneterephthalate. The sample was melted at 290°C and cooled at a rate of 10°C/min. Another heat generation ($\Delta$Hc) was recorded at a temperature of 200°C to 230°C. This heat generation is caused upon solidification of the sample. $\Delta$ Hh/$\Delta$Hc is a convenient method of measuring a crystallinity. The $\Delta$Hh/$\Delta$Hc ratio is preferably 0.25 or less.

| | Example 1 | Example 2 | Example 3 |
|---|---|---|---|
| PET | 80 | 65 | 80 |
| PE | | | 10 |
| PP | 10 | 10 | |
| Sodium salt | 5 | 5 | 5 |
| Epoxy compound | 5 | 20 | 5 |
| Density (g/cm³) | 1.22 | 1.17 | 1.23 |
| Layer peeling state | None | None | None |
| Izod impact strength | 23 | 80 | 29 |
| Low-temperature molding properties | Good | Good | Good |
| ΔHh/ΔHc | 0.10 | 0.08 | 0.11 |

4

|  | Example 4 | Comparative Example 1 | Comparative Example 2 |
|---|---|---|---|
| PET | 80 | 80 | 80 |
| PE | | | |
| PP | 8 | 15 | 10 |
| Sodium salt | 1 | 5 | |
| Epoxy compound | 11 | | 10 |
| Density $(g/cm^3)$ | 1.22 | 1.22 | 1.22 |
| Layer peeling state | None | Yes | None |
| Izod impact strength | 42 | 3 | 38 |
| Low-temperature molding properties | Good | Good | Slightly poor |
| $\Delta Hh/\Delta Hc$ | 0.09 | 0.08 | 0.35 |

|  | Example 5 | Example 6 | Example 7 |
|---|---|---|---|
| PET | 84.5 | 69.5 | 66 |
| PE | | | |
| PP | 10 | 12 | 12 |
| Sodium salt | | 0.5 | 4 |
| Talc | 0.5 | | |
| Epoxy compound | 5 | | |
| Acid anhydride-modified compound | | 18 | 18 |
| Density $(g/cm^3)$ | 1.23 | 1.17 | 1.17 |
| Layer peeling state | None | None | None |
| Izod impact strength | 18 | 6 | 22 |
| Low-temperature molding properties | Good | Good | Good |
| $\Delta Hh/\Delta Hc$ | 0.11 | 0.22 | 0.19 |

|  | Example 8 | Example 9 | Comparative Example 3 |
|---|---|---|---|
| PET | 52 | 45 | 50 |
| Sodium PE |  |  |  |
| PP | 8 | 10 | 15 |
| Sodium salt | 5 | 5 | 5 |
| Epoxy compound | 5 | 10 |  |
| Glass fiber | 30 | 30 | 30 |
| Density ($g/cm^3$) | 1.44 | 1.40 | 1.39 |
| Layer peeling state | None | None | Yes |
| Heat deformation temperature | 222 | 210 | 221 |
| Izod impact strength | 12 | 20 | 5 |
| Low-temperature molding properties | Good | Good | Good |
| $\Delta Hh/\Delta Hc$ | 0.06 | 0.07 | 0.06 |

|  | Comparative Example 4 | Comparative Example 5 | Example 10 |
|---|---|---|---|
| PET | 50 | 60 | |
| Sodium PE | | | 55 |
| PP | 10 | | 10 |
| Sodium salt | | | |
| Epoxy compound | 10 | 10 | 5 |
| Glass fiber | 30 | 30 | 30 |
| Density ($g/cm^3$) | 1.41 | 1.49 | 1.43 |
| Layer peeling state | None | None | None |
| Heat deformation temperature | 215 | 224 | 224 |
| Izod impact strength | 22 | 25 | 13 |
| Low-temperature molding properties | Slightly poor | Poor | Good |
| $\Delta Hh/\Delta Hc$ | 0.25 | 0.32 | 0.06 |

As is apparent from the measurement results summarized in the above tables, the polyester resin composition of the present Invention is a resin composition which has good mechanical characteristics of polyethyleneterephthalate, is excellent particularly in low-temperature molding properties, and provides a good outer appearance of a molded product. In addition, a molded product having a specific gravity lower than that of a low-temperature product of polyethyleneterephthalate can be obtained, and no problem is posed in the molding even if no plasticizer is added in the molding.

As has been described above, the polyester resin composition of the present invention has good mechanical characteristics of polyethyleneterephthalate, is excellent particularly in low-temperature molding properties, and provides a good outer appearance of a molded product. In addition, since a molded product having a specific gravity lower than that of a low-temperature-molded product of polyethyleneterephthalate can be obtained, a molded product of a light weight which has been recently required can be satisfactorily realized. Furthermore, no problem is posed in the molding even if no plasticizer is added in the molding.

**Claims**

1. A polyester resin composition essentially consisting of:

   40 to 90 wt% of a polyethyleneterephthalate;

   2 to 30 wt% of a polyolefin;

   0.1 to 10 wt% of a compound containing sodium or potassium; and

   1 to 30 wt% of an olefin-based copolymer containing an epoxy resin or an olefin-based copolymer modified by an acid anhydride.

2. A polyester resin composition essentially consisting of:

40 to 90 wt% of polyethyleneterephthalate having a sodium or potassium atom at a terminal end thereof;

2 to 30 wt% of a polyolefin; and

1 to 30 wt% of an olefin-based copolymer containing an epoxy group or an olefin-based copolymer modified by an acid anhydride.

3. The composition of Claim 1 wherein said compound containing sodium or potassium is partially or entirely replaced by 0.01 to 3 wt% of talc.

4. The composition of Claim 1, 2 or 3 further consisting essentially of 5 to 150 parts by weight of an inorganic reinforcing substance with respect to 100 parts by weight of said composition.